# EUROPÄISCHE PATENTSCHRIFT

(11) **EP 1 492 189 B1**
(45) Veröffentlichungstag und Bekanntmachung des Hinweises auf die Patenterteilung: **14.12.2005**
(21) Anmeldenummer: 04012283.0
(22) Anmeldetag: 25.05.2004
(51) Int. Cl.: H01M 8/04

(54) **Brennstoffzelle mit Kurzschlussmittel**
Fuel cell with short-circuiting means
Pile à combustible comportant un moyen de court-circuitage

(30) Priorität: 24.06.2003 DE 10328255
(43) Veröffentlichungstag der Anmeldung: 29.12.2004
(73) Patentinhaber: Daimler Chrysler AG, 70567 Stuttgart (DE)
(72) Erfinder: Walliser, Dirk, Dr., 73773 Aichwald (DE)

(56) Entgegenhaltungen:
- DE-A- 10 059 392
- DE-A- 19 907 369
- DE-C- 19 746 616

## Beschreibung

Die Erfindung betrifft eine Brennstoffzelle mit mindestens zwei Bipolarplatten und einer zwischen den Bipolarplatten angeordneten, jeweils mindestens eine Kontaktstelle bildenden Membran-Elektroden-Einheit (MEA), wobei die jeweilige Bipolarplatte und die MEA mittel- oder unmittelbar elektrisch kontaktiert sind.

Es sind bereits seriell verbundene Brennstoffzellen aus der DE 199 07 369 A1 bekannt, die mit Dioden derart parallel geschaltet sind, dass der von der Brennstoffzelle erzeugte Strom keinen Kurzschluss verursachen kann. Fällt eine Zelle aus, so fließt der Strom über eine parallel geschaltete Diode, da dann die Diode den geringeren Widerstand bildet. Im regulären Betrieb fällt an den Dioden jedoch eine Verlustspannung ab, die zu einem Wärmeeintrag führt.

Der Erfindung liegt die Aufgabe zugrunde, eine Brennstoffzelle derart auszubilden und anzuordnen, dass eine einfache und effektive Ausfallüberbrückung gewährleistet ist.

Gelöst wird die Aufgabe erfindungsgemäß dadurch, dass ein durch Wärme aktivierbares Kurzschlussmittel im Bereich zwischen den beiden benachbarten Bipolarplatten und/oder in den beiden benachbarten Bipolarplatten zum Kurzschließen der Bipolarplatten vorgesehen ist. Hierdurch wird erreicht, dass durch die Temperaturerhöhung einer defekten Zelle der Schmelzvorgang des Kurzschlussmittels eingeleitet wird, sodass dieses im flüssigen Zustand, unterstützt durch die Porosität der MEA bzw. unterstützt durch die Gewichtskraft, die MEA durchdringt und zu einem elektrischen Kurzschluss der beiden Bipolarplatten führt. Die innerhalb der MEA angeordnete Polymer-Elektrolyt-Membran (PEM) kann dabei allein durch den Überhitzungsvorgang der Brennstoffzelle zerstört sein, sodass das Kurzschlussmittel auch durch sie hindurch treten kann. Dabei ist es aber auch möglich, dass das Kurzschlussmittel in der erwärmten flüssigen Form die Polymer-Elektrolyt-Membran (PEM) durchschmilzt und so der elektrische Kontakt zwischen beiden Bipolarplatten generiert wird. Beim Ausfall einer oder mehrerer Brennstoffzellen, Einzelzellen ist der Betrieb des gesamten Brennstoffzellenstacks weiter möglich. Beim Ausfall einer oder sehr weniger einzelner Brennstoffzellen wird die Leistung des Brennstoffzellenstacks zwar reduziert, jedoch bleibt dieser Brennstoffzellenstack betriebsbereit. Eine Notlauffunktion des Brennstoffzellenantriebs ist damit gewährleistet. Daneben ist der Überwachungsaufwand bzw. Einzelzellenspannungsüberwachungsaufwand einschränkbar, da nach Ausfall von Brennstoffzellen lediglich mit einem Leistungsabfall zu rechnen ist.

Hierzu ist es vorteilhaft, dass die Bipolarplatte und die MEA mindestens eine gemeinsame Kontaktstelle bilden und das Kurzschlussmittel im Bereich der Kontaktstelle auf und/oder innerhalb der jeweiligen Bipolarplatte vorgesehen ist. Durch die Anordnung des Kurzschlussmittels im Bereich der Kontaktstelle zwischen der Bipolarplatte und der MEA bleibt der Gaskontakt zur MEA erhalten.

Eine zusätzliche Möglichkeit ist gemäß einer Weiterbildung, dass das Kurzschlussmittel zwischen mindestens einer Bipolarplatte und der MEA angeordnet ist. Bei der Anordnung des Kurzschlussmittels zwischen der Bipolarplatte und der MEA kann das Kurzschlussmittel im Aufbau der Brennstoffzelle als separates Bauteil integriert sein oder sowohl mit der MEA als auch mit der jeweiligen Bipolarplatte flächig verbunden sein.

Durch das Kurzschlussmittel zwischen der Bipolarplatte und der MEA ist die Kontaktstelle bzw. elektrische Leitfähigkeit zwischen der Bipolarplatte und der MEA gewährleistet.

Ferner ist es vorteilhaft, dass das Kurzschlussmittel in die jeweilige Bipolarplatte und/oder in die MEA integriert ist und/oder auf die jeweilige Bipolarplatte und/oder auf die MEA aufgebracht ist. Die Integration des Kurzschlussmittels in die Bipolarplatte erfordert eine Gefäß-/Porenstruktur der Bipolarplatte, sodass das Kurzschlussmittel eingelagert sein kann. Daneben sind auch Nut- bzw. Kanalstrukturen innerhalb der Oberfläche der jeweiligen Bipolarplatte möglich.

Vorteilhaft ist es hierzu auch, dass das Kurzschlussmittel schmelzbar ausgebildet ist und einen Schmelzpunkt zwischen 50°C und 120°C, insbesondere zwischen 80°C und 90°C, aufweist. Die Schmelztemperatur bzw. der Schmelzpunkt ist dabei an den kritischen Temperaturpunkt der jeweiligen Brennstoffzelle angepasst. Je nach Art der verwendeten Polymer-Elektrolyt-Membran (PEM) ist der zu verwendende Schmelzpunkt an die kritische Temperatur dieser Membran anzugleichen.

Gemäß einer bevorzugten Ausführungsform der erfindungsgemäßen Lösung ist schließlich vorgesehen, dass die jeweilige Bipolarplatte und/oder die MEA eine den Schmelzfluss des Kurzschlussmittels gewährleistende Kanal- und/oder Porenstruktur aufweist. Damit das Kurzschlussmittel von der einen Bipolarplatte zur anderen fließen kann, ist eine hierfür ausgebildete Kanal- bzw. Porenstruktur von Vorteil. Bei einer Unterstützung des Schmelzflusses durch die Schwerkraft ist eine Kanalstruktur zur optimalen Umlenkung bzw. Leitung des Schmelzflusses insbesondere mit Rücksicht auf die durchzuschmelzende oder zerstörte Polymer-Elektrolyt-Membran (PEM) von Vorteil. Wenn der Schmelzfluss jedoch entgegen der Schwerkraft auch nach oben hin erfolgen soll, so ist eine Porenstruktur mit der damit verbundenen Kapillarkraft zu verwenden.

Von besonderer Bedeutung ist für die vorliegende Erfindung, dass das Kurzschlussmittel unabhängig von der Temperatur mit beiden Bipolarplatten in Kontakt steht und in einem Temperaturbereich zwischen 50°C und 120°C, insbesondere zwischen 80°C und 90°C, leitfähig und in anderen Temperaturbereichen elektrisch isolierend ist. Das Kurzschlussmittel wird dabei durch die Polymer-Elektrolyt-Membran (PEM) geführt und gewährleistet die Trennung der beiden Gasräume. Bei entsprechender Temperatur wird das Kurzschlussmittel elektrisch leitend und die Brennstoffzelle ist kurzgeschlossen. Der durch das Kurzschlussmittel fließende Strom unterstützt die Aufwärmung desselben. Die Polymer-Elektrolyt-Membran (PEM) ist dabei in ihrer unzerstörten, betriebsbedingten Funktion gasdicht und wird erst bei Ausfall der Brennstoffzelle und der damit verbundenen Temperaturerhöhung entweder aufgrund der höheren Temperaturen oder aber durch das schmelzende bzw. geschmolzene Kontaktmittel derart zerstört, dass das Kontaktmittel beide Bipolarplatten elektrisch verbinden kann.

Im Zusammenhang mit der erfindungsgemäßen Ausbildung und Anordnung ist es von Vorteil, dass die Polymer-Elektrolyt-Membran (PEM) mittels des Kurzschlussmittels durchschmelzbar ist. Das warme bzw. geschmolzene Kurzschlussmittel kommt mit der Polymer-Elektrolyt-Membran (PEM) in Kontakt und schmilzt diese an, sodass ein elektrischer Kontakt bzw. Kurzschluss zwischen den beiden Bipolarplatten durch die Polymer-Elektrolyt-Membran (PEM) hindurch erfolgt.

Vorteilhaft ist es ferner, dass mehrere Brennstoffzellen einen Brennstoffzellenstapel mit einem Gaseintrittskanal bilden, wobei die Brennstoffzellen oder Brennstoffzellenteile, die im Bereich des Gaseintrittskanals angeordnet sind, das Kurzschlussmittel aufweisen. Im Bereich des Gaseintrittskanals der Brennstoffzelle bzw. des Brennstoffzellenstapels kann es zu einer Austrocknung der MEA kommen, was dann zu einem Ausfall der jeweiligen Brennstoffzelle bzw. des Teils des Stapels führt. Durch die Verwendung des Kurzschlussmittels, insbesondere in diesem gefährdeten Bereich des Brennstoffzellenstapels, kann ein Weiterbetrieb der Brennstoffzellen mit geminderter Leistung erfolgen.

Außerdem ist es vorteilhaft, dass mehrere Brennstoffzellen einen Brennstoffzellenstapel bilden, wobei die Brennstoffzellen oder Brennstoffzellenteile, die in einem temperaturkritischen Bereich des Brennstoffzellenstapels angeordnet sind, das Kurzschlussmittel aufweisen. Die besonders wärmegefährdeten Teile des Brennstoffzellenstapels bzw. diese dort angeordneten Brennstoffzellen oder deren Teile können durch den Einsatz des Kurzschlussmittels im Fall der Überhitzung überbrückt werden, sodass die Ausfallwahrscheinlichkeit des gesamten Brennstoff zellenstapels mit Rücksicht auf die gefährdeten Stellen innerhalb des Stapels herabgesetzt ist.

Weitere Vorteile und Einzelheiten der Erfindung sind in den Patentansprüchen und in der Beschreibung erläutert und in den Figuren dargestellt.

Dabei zeigen:
- Fig. 1: eine Prinzipskizze einer Brennstoffzelle bestehend aus zwei Bipolarplatten mit integriertem Kurzschlussmittel und Membran-Elektroden-Einheit (MEA);
- Fig. 2: eine Prinzipskizze einer Brennstoffzelle mit zwei Bipolarplatten, Membran-Elektroden-Einheit (MEA) und Kurzschlussmittel;
- Fig. 3: eine Prinzipskizze einer Brennstoffzelle mit zwei Bipolarplatten und Membran-Elektroden-Einheit (MEA) mit integriertem Kurzschlussmittel;
- Fig. 4: eine Prinzipskizze einer Brennstoffzelle mit zwei Bipolarplatten, Membran-Elektroden-Einheit (MEA) und durchgehend angeordnetem Kurzschlussmittel.

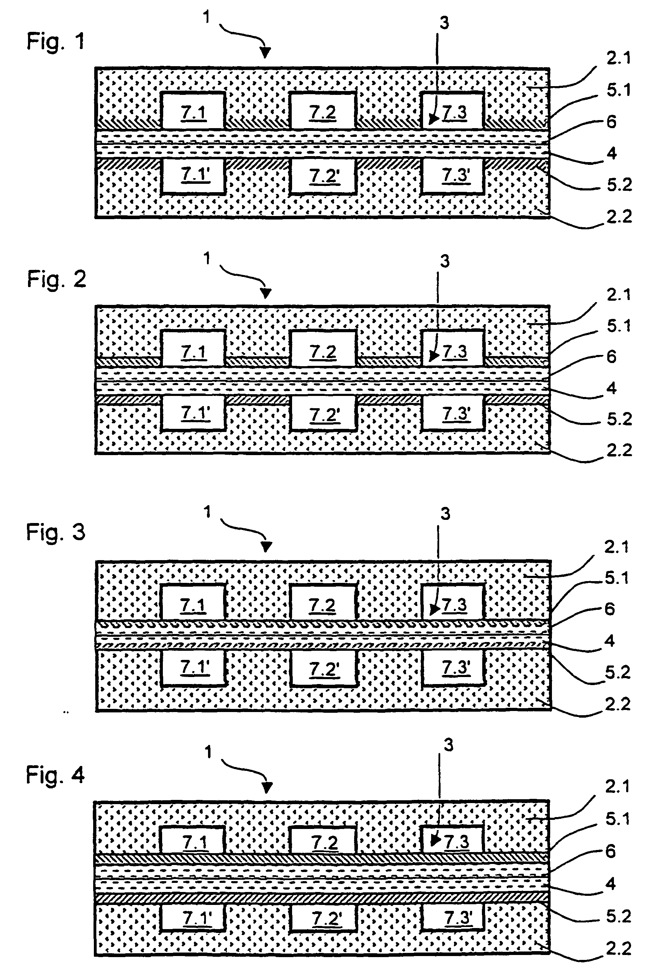

Eine in Figur 1 dargestellte Brennstoffzelle 1 weist im Wesentlichen eine obere, erste Bipolärplatte 2.1 und eine untere, zweite Bipolarplatte 2.2 auf. Die jeweilige Bipolarplatte 2.1, 2.2 weist nutförmige Ausnehmungen 7.1-7.3, 7.1'-7.3' auf, die jeweils einen Strömungskanal bilden.

Zwischen den Bipolarplatten 2.1, 2.2 ist eine Membran-Elektroden-Einheit 4 angeordnet. Die Membran-Elektroden-Einheit 4 liegt dabei flächig an der jeweiligen Bipolarplatte 2.1, 2.2 derart an, dass die nutförmigen Strömungskanäle 7.1-7.3, 7.1'-7.3' durch die Membran-Elektroden-Einheit 4 an ihrer dem Nutgrund gegenüberliegenden Seite kanalförmig verschlossen sind.

Innerhalb der Membran-Elektroden-Einheit 4 ist eine Polymer-Elektrolyt-Membran (PEM) 6 zur Trennung der beiden Bipolarplatten 2.1, 2.2 bzw. der dort strömenden Gase vorgesehen.

Die Bipolarplatte 2.1 weist im Bereich einer Kontaktstelle 3 mit der Membran-Elektroden-Einheit 4 ein Kurzschlussmittel 5.1 auf. Das Kurzschlussmittel 5.1 ist dabei innerhalb der Bipolarplatte 2.1 bzw. innerhalb nicht weiter dargestellter Poren oder Kammern der Bipolarplatte 2.1 angeordnet. Das Kurzschlussmittel 5.1 ist damit im Bereich der Kontaktstelle 3 zwischen der Bipolarplatte 2.1 und der Membran-Elektroden-Einheit 4 sowie zwischen den jeweiligen Strömungskanälen 7.1-7.3 angeordnet. Die Einbringtiefe bzw. die Höhe des Kontaktmittels beträgt dabei etwa 30 % der Tiefe des jeweiligen Strömungskanals 7.1-7.3 und ist in weiteren, nicht dargestellten Ausführungsbeispielen der Dicke bzw. Höhe der Membran-Elektroden-Einheit 4 entsprechend ausgebildet.

Die untere, zweite Bipolarplatte 2.2 weist ebenfalls ein Kurzschlussmittel 5.2 in der gleichen Art und Ausgestaltung wie die erste Bipolarplatte 2.1 auf.

Gemäß Figur 2 ist das Kurzschlussmittel 5.1, 5.2 nicht in die Bipolarplatte 2.1, 2.2 integriert, sondern im Bereich der jeweiligen Kontaktstelle 3 zwischen der jeweiligen Bipolarplatte 2.1, 2.2 und der Membran-Elektroden-Einheit 4 angeordnet. Das Kurzschlussmittel 5.1, 5.2 ist damit sandwichartig zwischen der jeweiligen Kontaktstelle 3 der jeweiligen Bipolarplatte 2.1, 2.2 und der Membran-Elektroden-Einheit 4 aufgenommen.

Gemäß Ausführungsbeispiel Figur 3 ist das Kurzschlussmittel 5.1, 5.2 innerhalb der Membran-Elektroden-Einheit 4 integriert. Das Kurzschlussmittel 5.1, 5.2 ist dabei innerhalb nicht weiter dargestellter Poren bzw. Ausnehmungen oder Kanäle 7.1-7.3, 7.1'-7.3' innerhalb der Membran-Elektroden-Einheit 4 bzw. im Bereich ihrer Kontaktoberfläche angeordnet. Das Kurzschlussmittel 5.1, 5.2 erstreckt sich damit ganzflächig im Bereich der der jeweiligen Bipolarplatte 2.1, 2.2 zugewandten Oberfläche der Membran-Elektroden-Einheit 4. In nicht dargestellten Ausführungsbeispielen ist die Eindringtiefe bzw. -höhe des Kurzschlussmittels 5.1, 5.2 der Dicke der Membran-Elektroden-Einheit 4 entsprechend größer oder kleiner ausgebildet.

Das Kurzschlussmittel 5.1, 5.2 gemäß Figur 4 ist wiederum sandwichartig zwischen der jeweiligen Bipolarplatte 2.1, 2.2 und der Membran-Elektroden-Einheit 4 aufgenommen. Das Kurzschlussmittel 5.1, 5.2 erstreckt sich dabei der Membran-Elektroden-Einheit 4 entsprechend ganzflächig und stellt damit die Verschlussfläche der Strömungskanäle 7.1-7.3, 7.1'-7.3' dar. In nicht weiter dargestellten Ausführungsbeispielen variiert die Dicke des Kurzschlussmittels 5.1, 5.2 entsprechend der Dicke der Membran-Elektroden-Einheit 4.

Die erfindungsgemäße Brennstoffzelle ist prinzipiell sowohl für mobile, als auch für stationäre Einrichtungen geeignet. Bevorzugt ist jedoch die Verwendung der erfindungsgemäßen Brennstoffzelle in mobilen Einrichtungen, wie z.B. Fahrzeuge und portable elektronische Geräte, da in diesem Fall ein schnelles und unkompliziertes Überbrücken schadhafter Einzelzellen, wie es die vorliegende Erfindung gewährleistet, besonders wichtig ist. Zu den Fahrzeugen werden beispielsweise Landfahrzeuge, (wie z.B. Personenkraftwagen, Lastkraftwagen, Motorräder, Züge und dergleichen), Wasserfahrzeuge und Raumfahrzeuge gezählt.

## Patentansprüche

1. Brennstoffzelle (1) mit mindestens zwei Bipolarplatten (2.1, 2.2) und einer zwischen den Bipolarplatten (2.1, 2.2) angeordneten, jeweils mindestens eine Kontaktstelle (3) bildenden Membran-Elektroden-Einheit MEA (4), wobei die jeweilige Bipolarplatte (2.1, 2.2) und die MEA (4) mittel- oder unmittelbar elektrisch kontaktiert sind,
**dadurch gekennzeichnet,**
**dass** ein Kurzschlussmittel (5.1, 5.2) im Bereich zwischen den beiden benachbarten Bipolarplatten (2.1, 2.2) und/oder in den beiden benachbarten Bipolarplatten (2.1, 2.2) zum Kurzschließen der Bipolarplatten (2.1, 2.2) vorgesehen ist, das durch einen Wärmeeintrag aktivierbar ist.

2. Brennstoffzelle nach Anspruch 1,
**dadurch gekennzeichnet,**
**dass** die Bipolarplatten (2.1, 2.2) und die MEA (4) mindestens eine gemeinsame Kontaktstelle (3) bilden und das Kurzschlussmittel (5.1, 5.2) im Bereich der Kontaktstelle (3) auf und/oder innerhalb der jeweiligen Bipolarplatte (2.1, 2.2) vorgesehen ist.

3. Brennstoffzelle nach Anspruch 1 oder 2,
**dadurch gekennzeichnet,**
**dass** das Kurzschlussmittel (5.1, 5.2) zwischen mindestens einer Bipolarplatte (2.1, 2.2) und der MEA (4) angeordnet ist.

4. Brennstoffzelle nach Anspruch 1 oder 2,
**dadurch gekennzeichnet,**
**dass** das Kurzschlussmittel (5.1, 5.2) in die jeweilige Bipolarplatte (2.1, 2.2) und/oder in die MEA (4) integriert ist und/oder auf die jeweilige Bipolarplatte (2.1, 2.2) und/oder auf die MEA (4) aufgebracht ist.

5. Vorrichtung nach einem der vorhergehenden Ansprüche,
**dadurch gekennzeichnet,**
**dass** das Kurzschlussmittel (5.1, 5.2) schmelzbar ist und einen Schmelzpunkt zwischen 50°C und 120°C, insbesondere zwischen 80°C und 90°C, aufweist.

6. Brennstoffzelle nach einem der vorhergehenden Ansprüche,
**dadurch gekennzeichnet,**
**dass** die jeweilige Bipolarplatte (2.1, 2.2) und/oder die MEA (4) eine den Schmelzfluss des Kurzschlussmittels (5.1, 5.2) gewährleistende Kanal- und/oder Porenstruktur aufweist.

7. Brennstoffzelle nach einem der vorhergehenden Ansprüche,
**dadurch gekennzeichnet,**
**dass** das Kurzschlussmittel (5.1, 5.2) unabhängig von der Temperatur mit beiden Bipolarplatten (2.1, 2.2) in Kontakt steht und in einem Temperaturbereich zwischen 50°C und 120°C, insbesondere zwischen 80°C und 90°C, leitfähig und in anderen Temperaturbereichen elektrisch isolierend ist.

8. Brennstoffzelle nach einem der vorhergehenden Ansprüche,
**dadurch gekennzeichnet,**
**dass** eine Polymer-Elektrolyt-Membran (PEM) (6) mittels des Kurzschlussmittels (5.1, 5.2) durchschmelzbar ist.

9. Brennstoffzelle nach einem der vorhergehenden Ansprüche,
**dadurch gekennzeichnet,**
**dass** mehrere Brennstoffzellen (1) einen Brennstoffzellenstapel bilden, der an einen gemeinsamen Gaseintrittskanal angeschlossen ist, wobei die Brennstoffzellen (1) oder Brennstoff zellenteile, die im Bereich des Gaseintrittskanals angeordnet sind, das Kurzschlussmittel (5.1, 5.2) aufweisen.

10. Brennstoffzelle nach einem der vorhergehenden Ansprüche,
**dadurch gekennzeichnet,**
**dass** die Brennstoffzellen (1) oder Brennstoffzellenteile, die in einem temperaturkritischen Bereich des Brennstoffzellenstapels angeordnet sind, das Kurzschlussmittel (5.1, 5.2) aufweisen.

## Claims

1. Fuel cell (1) having at least two bipolar plates (2.1, 2.2) and a membrane electrode unit MEA (4), which is arranged between the bipolar plates (2.1, 2.2) and in each case forms at least one contact point (3), with each bipolar plate (2.1, 2.2) and the MEA (4) making indirect or direct electrical contact,
**characterized in that**
a short-circuiting means (5.1, 5.2) is provided in the area between the two adjacent bipolar plates (2.1, 2.2) and/or in the two adjacent bipolar plates (2.1, 2.2) in order to short-circuit the bipolar plates (2.1, 2.2), which short-circuiting means (5.1, 5.2) can be activated by the introduction of heat.

2. Fuel cell according to claim 1,
wherein
the bipolar plates (2.1, 2.2) and the MEA (4) form at least one common contact point (3), and the short-circuiting means (5.1, 5.2) is provided in the area of the contact point (3) on and/or within the respective bipolar plate (2.1, 2.2).

3. Fuel cell according to claim 1 or 2,
wherein
the short-circuiting means (5.1, 5.2) is arranged between at least one bipolar plate (2.1, 2.2) and the MEA (4).

4. Fuel cell according to claim 1 or 2,
wherein
the short-circuiting means (5.1, 5.2) is integrated in the respective bipolar plate (2.1, 2.2) and/or in the MEA (4), and/or is fitted to the respective bipolar plate (2.1, 2.2) and/or to the MEA (4).

5. Apparatus according to one of the preceding claims,
**characterized in that**
the short-circuiting means (5.1, 5.2) is fusible and has a melting point between 50°C and 120°C, in particular between 80°C and 90°C.

6. Fuel cell according to one of the preceding claims,
**characterized in that**
each bipolar plate (2.1, 2.2) and/or the MEA (4) have/has a channel and/or pore structure which ensures that the melted short-circuiting means (5.1, 5.2) flows.

7. Fuel cell according to one of the preceding claims,
**characterized in that**
the short-circuiting means (5.1, 5.2) makes contact with both bipolar plates (2.1, 2.2) irrespective of the temperature, is electrically conductive in a temperature range between 50°C and 120°C, in particular between 80°C and 90°C, and is electrically isolating in other temperature ranges.

8. Fuel cell according to one of the preceding claims,
**characterized in that**
a polymer electrolyte membrane (PEM) (6) can be melted through by means of the short-circuiting means (5.1, 5.2).

9. Fuel cell according to one of the preceding claims,
**characterized in that**
two or more fuel cells (1) form a fuel cell stack, which is connected to a common gas inlet channel, with the fuel cells (1) or fuel cell parts which are arranged in the area of the gas inlet channel having the short-circuiting means (5.1, 5.2).

10. Fuel cell according to one of the preceding claims,
**characterized in that**
the fuel cells (1) or fuel cell parts which are arranged in an area of the fuel cell stack where the temperature is critical have the short-circuiting means (5.1, 5.2).

## Revendications

1. Pile à combustible (1) comprenant au moins deux plaques bipolaires (2.1, 2.2) et une unité d'électrodes à membrane MEA (4) disposée entre les plaques bipolaires (2.1, 2.2) et formant à chaque fois au moins une zone de contact (3), les plaques bipolaires (2.1, 2.2) respectives et la MEA (4) étant mises en contact électrique de manière directe ou indirecte,
**caractérisée en ce**
**qu'**un moyen de court-circuitage (5.1, 5.2) est prévu dans la région entre les deux plaques bipolaires (2.1, 2.2) voisines et/ou dans les deux plaques bipolaires (2.1, 2.2) voisines en vue de court-circuiter les plaques bipolaires (2.1, 2.2), lequel peut être activé par un apport de chaleur.

2. Pile à combustible selon la revendication 1,
**caractérisée en ce que** les plaques bipolaires (2.1, 2.2) et la MEA (4) forment au moins une zone de contact commune (3) et le moyen de court-circuitage (5.1, 5.2) est prévu dans la zone de contact (3) sur et/ou dans les plaques bipolaires (2.1, 2.2) respectives.

3. Pile à combustible selon la revendication 1 ou 2,
**caractérisée en ce que** le moyen de court-circuitage (5.1, 5.2) est disposé entre au moins une plaque bipolaire (2.1, 2.2) et la MEA (4).

4. Pile à combustible selon la revendication 1 ou 2,
**caractérisée en ce que** le moyen de court-circuitage (5.1, 5.2) est intégré dans la plaque bipolaire (2.1, 2.2) respective et/ou dans la MEA (4) et/ou est placé sur la plaque bipolaire (2.1, 2.2) respective et/ou sur la MEA (4).

5. Dispositif selon l'une quelconque des revendications précédentes,
**caractérisé en ce que** le moyen de court-circuitage (5.1, 5.2) est fusible et présente un point de fusion compris entre 50°C et 120°C, notamment entre 80°C et 90°C.

6. Pile à combustible selon l'une quelconque des revendications précédentes,
**caractérisée en ce que** la plaque bipolaire (2.1, 2.2) respective et/ou la MEA (4) présente une structure de canal et/ou de pores garantissant un flux de fusion du moyen de court-circuitage (5.1, 5.2).

7. Pile à combustible selon l'une quelconque des revendications précédentes,
**caractérisée en ce que**
le moyen de court-circuitage (5.1, 5.2) est en contact avec les deux plaques bipolaires (2.1, 2.2) indépendamment de la température et est conducteur dans une plage de température comprise entre 50°C et 120°C, notamment entre 80°C et 90°C, et est isolant électrique dans les autres plages de température.

8. Pile à combustible selon l'une quelconque des revendications précédentes,
**caractérisée en ce**
**qu'**une membrane d'électrolyte polymère (PEM) (6) peut être fondue au moyen du moyen de court-circuitage (5.1, 5.2).

9. Pile à combustible selon l'une quelconque des revendications précédentes,
**caractérisée en ce que** plusieurs piles à combustible (1) forment un empilement de piles à combustible qui est raccordé à un canal d'entrée de gaz commun, les piles à combustible (1) ou les parties de pile à combustible qui sont disposées dans la région du canal d'entrée de gaz présentant le moyen de court-circuitage (5.1, 5.2).

10. Pile à combustible selon l'une quelconque des revendications précédentes,
**caractérisée en ce que** les piles à combustibles (1) ou les parties de pile à combustible qui sont disposées dans une plage de température critique de l'empilement de piles à combustible, présentent le moyen de court-circuitage (5.1, 5.2).
